# EUROPEAN PATENT SPECIFICATION

(11) **EP 0 933 554 B1**
(45) Date of publication and mention of the grant of the patent: **29.10.2003**
(21) Application number: 98830040.6
(22) Date of filing: 29.01.1998
(51) Int. Cl.: F16F 15/123

(54) **A disk for a disk clutch**
Scheibe für eine Scheibenkupplung
Disque pour embrayage à disques

(43) Date of publication of application: 04.08.1999
(73) Proprietor: MEC.ARM. S.r.l., 81100 Caserta (IT)
(72) Inventor: Caporaso, Giuseppe, 81026 Recale, Caserta (IT)
(74) Representative: Siniscalco, Fabio

(56) References cited:
- FR-A- 2 536 481
- FR-A- 2 718 208
- GB-A- 2 169 988
- GB-A- 2 183 787

## Description

The present invention relates to a disk for a disk clutch for motor vehicles and the like, of the type comprising a disk flange and a flange fixed to the disk flange, a space for housing springs of a main damper and a respective hub flange being defined between the flanges, see FR-A-2 718 208 which shows furthermore a substantially bell-shaped body disposed in the space between the disk flange and the hub flange.

As is known, there is a need also to provide a pre-damper alongside the main damper in the disks of clutches for motor vehicles and the like. The main damper is distinguished by a high reaction torque which is developed beyond a certain angular play. The pre-damper, on the other hand, is distinguished by a gentle reaction torque which is developed practically without angular play, within the angular play of the main damper, to prevent vibrations and hence noise.

Various types of pre-damper for satisfying the aforesaid requirement are known but, although these are satisfactory from various points of view and substantially fulfill their purpose, they nevertheless have the recognized disadvantage of being structurally complex, resulting in a complex and heavy disk, with all of the ensuing problems.

The problem upon which the present invention is based is that of devising a disk of the type specified which has structural and functional characteristics such as to overcome the aforesaid disadvantage.

This problem is solved by a disk of the type specified which is characterized in that the substantially bell-shaped body disposed in the space between the disk flange and the hub flange is closed onto the disk flange and defines with the disk flange a space in which springs of a pre-damper and a respective hub flange are housed, fixing means being provided for fixing the substantially bell-shaped body to the disk flange.

Further characteristics and the advantages of the disk according to the present invention will become clear from the following description of a preferred embodiment thereof, given by way of nonlimiting example, with reference to the appended drawings, in which:

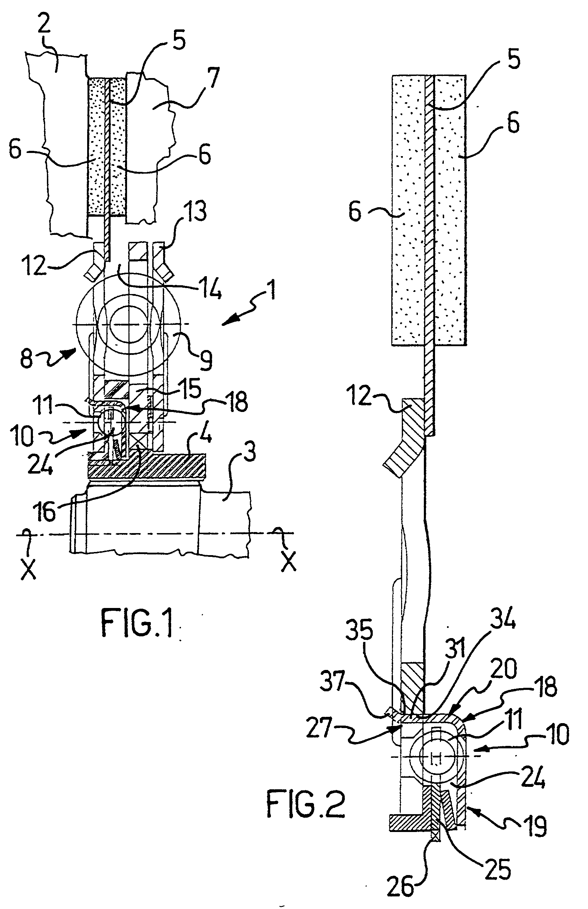

Figure 1 is a partially-sectioned view of a disk according to the present invention,
Figure 2 is a partially-sectioned view showing a detail of the disk of Figure 1, on an enlarged scale, and

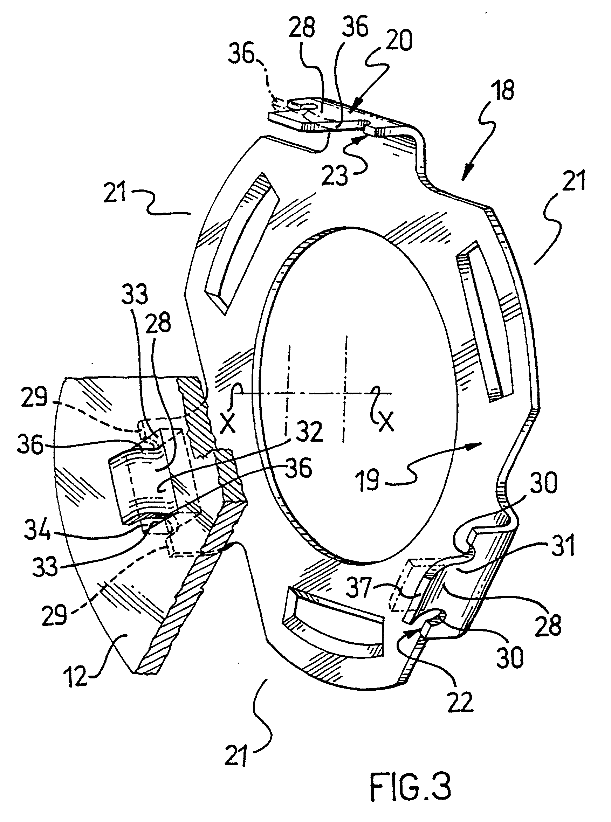

Figure 3 is a partially-sectioned, perspective view of a detail of the disk of Figure 1.

With reference to the appended drawings, a disk for a disk clutch for a motor vehicle is generally indicated 1.

The disk 1 is intended for coupling a flywheel 2 belonging to a engine of the motor vehicle for rotation with a shaft 3 belonging to a gearbox of the motor vehicle.

For this purpose, the disk 1, which has an axis X-X, comprises a hub 4 fixed for rotation with the shaft 3 and a disk plate 5 which is provided with friction material 6 and, when subjected to the action of a pressure plate 7, is fixed for rotation with the flywheel 2.

The disk 1 comprises a main damper 8 having springs 9 which can produce a large reaction torque, and a pre-damper 10 having springs 1 which can produce a gentle reaction torque which is developed, as is known, within the angular play of the main damper 8.

In particular, the disk 1 comprises a disk flange 12 fixed to the disk plate 5 and a flange 13 which is fixed to the disk plate 5, for example, by means of spacer rods. The disk flange 12 and the flange 13 are spaced a predetermined distance apart so as to define between them a space 14 in which the springs 9 are housed.

The space 14 also houses a respective hub flange 15 which is fixed for rotation with the hub 4, for example, by means of a splined coupling 15 having a predetermined angular play, and which cooperates with the springs 9 to complete the damper 8.

The disk 1 according to the present invention comprises a substantially bell-shaped body, generally indicated 18, of axis X-X, having a base 19 and a skirt 20, and disposed in the space 14 in a position between the disk flange 12 and the hub flange 15 so that the base 19 faces the hub flange and the skirt faces towards the disk flange 12.

The skirt 20 has three large, circumferentially uniformly-spaced openings 21 for reducing its weight and terminates in a free rim 22 which in turn is restricted by the openings to three equally-spaced circumferential portions 23.

The substantially bell-shaped body 18 is closed onto the disk flange 12 with the free rim 22 in abutment with the disk flange 12. The base 19 of the substantially bell-shaped body 18 is spaced from the disk flange and defines therewith a space 24 in which the springs of the pre-damper 10 are housed. The space 24 also houses a respective hub flange 25 which is fixed for rotation with the hub 4, for example, by means of a splined coupling 26 having practically zero angular play. The hub flange 25 cooperates with the springs 11 to complete the pre-damper 10.

Fixing means for fixing the substantially bell-shaped body 18 to the disk flange 12 are generally indicated 27.

According to the invention, the fixing means 27 are constituted by three tabs, all indicated 28, which project axially from the portions 23 of the free rim 22, substantially in the centre of each portion, so that each tab 28 defines in the respective portion two bearing regions 29 one on each side of the tab.

Between each bearing region 29 and the respective tab 28 there is a relief 30 which ensures complete and perfect flatness of the bearing region itself.

Each tab 28 has a first portion 31 extending from the free rim 22 through a respective slot 32 formed in the disk flange 12 and having sides 33 and an inwardly-facing end 34.

The tabs 28 have respective outer faces 35 which are in locating engagement with the ends 34 of the slots 32 so as to keep the substantially bell-shaped body 18 centred coaxially with the disk flange 12.

Moreover, the tabs 28 engage the sides 33 of the slots 32 with limited clearance so as to fix the substantially bell-shaped body 18 for rotation with the disk flange 12.

Each tab 28 has a radially outwardly-bent end portion 37 in engagement with the disk flange 12. The substantially bell-shaped body 18 is thus restrained axially relative to the disk flange 12 by the contact of the bearing regions 29 with one side of the disk flange and by the engagement of the bent end portion 37 of the tab 28 on the other side.

It should be noted that the substantially bell-shaped body 18 is advantageously produced, complete with the tabs 28, by pressing of a steel sheet having a predetermined, limited thickness, for example, of 2mm.

The main advantage of the disk according to the present invention lies in its unusual structural and constructional simplicity which, bearing in mind that it is an item which is to be produced on a very large scale, is an extremely important advantage.

A further advantage of the disk according to the present invention lies in its light weight.

Finally, it is structurally strong so that it can be expected to be able to cope with a long operative life without problems.

Naturally, in order to satisfy contingent and specific requirements, an expert in the art may apply to the above-described disk many modifications and variations all of which, however, are included within the scope of protection of the invention as defined by the following claims.

## Claims

1. A disk (1) for a disk clutch for motor vehicles and the like, of the type comprising a disk flange (12) and a flange (13) fixed to the disk flange (12), a space (14) for housing springs (9) of a main damper (8) and a respective hub flange (15) being defined between the flanges, **characterized in that** a substantially bell-shaped body (18) being disposed in the space (14) between the disk flange (12) and the hub flange (15), the substantially bell-shaped body (18) is closed onto the disk flange (12) and defines with the disk flange (12) a space in which springs (11) of a pre-damper (10) and a respective hub flange (25) are housed, fixing means (27) being provided for fixing the substantially bell-shaped body (18) to the disk flange (12).

2. A disk (1) according to Claim 1, **characterized in that** the substantially bell-shaped body (18) comprises a skirt (20) having a free rim (22) in abutment with the disk flange (12), and **in that** the fixing means (27) comprise tabs (28) projecting axially from the rim (22) of the skirt (20), each tab having a first portion (31) extending through a slot (32) formed in the disk flange (12) and a bent end portion (37) in engagement with the disk flange (12).

3. A disk (1) according to Claim 2, **characterized in that** the first portions (31) of the tabs (28) have outer faces (35) in locating engagement in inwardly-facing ends (34) of the slots (32).

4. A disk (1) according to Claim 3, **characterized in that** the end portions (37) of the tabs (28) are bent outwardly.

5. A disk (1) according to Claim 4, **characterized in that** the substantially bell-shaped body (18) and the tabs (28) are formed in a single piece by pressing of a sheet of steel of predetermined limited thickness.

## Patentansprüche

1. Lamelle (1) für eine Lamellenkupplung für Kraftfahrzeuge und dergleichen der Bauart, die eine Lamellenscheibe (12) und eine an der Lamellenscheibe (12) befestigten Scheibe (13), einen zwischen den Scheiben umgrenzten Raum (14) zur Aufnahme von Federn (9) eines Hauptdämpfers (8) und einer entsprechenden Nabenscheibe (15), einen im wesentlichen glockenförmigen Körper (18), der in dem Raum (14) zwischen der Lamellenscheibe (12) und der Nabenscheibe (15) untergebracht ist, umfasst, **dadurch gekennzeichnet, dass** der im wesentlichen glockenförmige Körper (18) auf der Lamellenscheibe (12) angebracht ist und mit der Lamellenscheibe (12) einen Raum umgrenzt, in dem Federn (11) eines Vordämpfers (10) und eine entsprechende Nabenscheibe (25) aufgenommen sind, wobei Befestigungsmittel (27) zum Befestigen des im wesentlichen glockenförmigen Körpers (18) an der Lamellenscheibe (12) bereitgestellt sind.

2. Lamelle (1) gemäß Anspruch 1, **dadurch gekennzeichnet, dass** der im wesentlichen glockenförmige Körper (18) eine Schürze (20) mit einem freien Rand (22) in Anschlag an der Lamellenscheibe (12) umfasst, und dadurch, dass das Befestigungsmittel (27) Laschen (28) umfasst, die axial vom Rand (22) der Schürze (20) vorragen, wobei jede Schürze einen ersten Bereich (31), der sich durch einen in der Lamellenscheibe (12) ausgebildeten Schlitz (32) erstreckt, und einen gebogenen Endbereich (37) in Eingriff mit der Lamellenscheibe (12) aufweist.

3. Lamelle (1) gemäß Anspruch 2, **dadurch gekennzeichnet, dass** die ersten Bereiche (31) der Laschen (28) äußere Flächen (35) in sicherndem Eingriff mit einwärts weisenden Enden (34) der Schlitze (32) aufweisen.

4. Lamelle (1) gemäß Anspruch 3, **dadurch gekennzeichnet, dass** die Endbereiche (37) der Laschen (28) auswärts gebogen sind.

5. Lamelle (1) gemäß Anspruch 4, **dadurch gekennzeichnet, dass** der im wesentlichen glockenförmige Körper (18) und die Laschen (20) durch Pressen eines Metallblechs von vorgegebener begrenzter Dicke einstückig ausgebildet sind.

## Revendications

1. Disque (1) pour embrayage à disque pour véhicule à moteur et analogues, du type comprenant une bride de disque (12) et une bride (13) fixée à la bride de disque (12), un espace (14) destiné à loger des ressorts (9) d'un amortisseur principal (8) et une bride de moyeu respective (15) étant définie entre les brides, un corps (18) sensiblement en forme de cloche étant disposé dans l'espace (14) entre la bride de disque (12) et la bride de moyeu (15), **caractérisé en ce que** le corps (18) sensiblement en forme de cloche est fermé sur la bride de disque (12) et définit avec la bride de disque (12) un espace dans lequel sont logés des ressorts (11) d'un pré-amortisseur (10) et une bride de moyeu respective (25), des moyens de fixation (27) étant prévus pour fixer le corps (18) sensiblement en forme de cloche à la bride de disque (12).

2. Disque (1) selon la revendication 1, **caractérisé en ce que** le corps (18) sensiblement en forme de cloche comprend une jupe (20) présentant un bord libre (22) en appui sur la bride de disque (12), et **en ce que** les moyens de fixation comprennent des languettes (28) s'étendant axialement depuis le bord (22) de la jupe (20), chaque languette comportant une première portion (31) s'étendant à travers une fente (32) ménagée dans la bride de disque (12) et une portion d'extrémité incurvée (37) en engagement avec la bride de disque (12).

3. Disque (1) selon la revendication 2, **caractérisé en ce que** les premières portions (31) des languettes (28) présentent des faces extérieures (35) en engagement de fixation dans des extrémités (34), dirigées vers l'intérieur, des fentes (32).

4. Disque (1) selon la revendication 3, **caractérisé en ce que** les portions d'extrémité (37) des languettes (28) sont incurvées vers l'extérieur.

5. Disque (1) selon la revendication 4, **caractérisé en ce que** le corps (18) sensiblement en forme de cloche et les languettes (28) sont formés d'un seule pièce par pressage d'une feuille d'acier d'épaisseur limitée déterminée.
